# FASCICULE DE BREVET EUROPEEN

(11) **EP 0 851 162 B1**
(45) Date de publication et mention de la délivrance du brevet: **17.03.2004**
(21) Numéro de dépôt: 97402920.9
(22) Date de dépôt: 03.12.1997
(51) Int. Cl.: F16K 27/00

(54) **Joint d'étanchéité et boîtier, notamment pour actionneur de robinet**
Dichtung und Gehäuse, insbesondere für eine Antriebsvorrichtung für Ventile
Sealing gasket and housing, particularly for a valve actuator

(30) Priorité: 23.12.1996 FR 9615869
(43) Date de publication de la demande: 01.07.1998
(73) Titulaire: KSB S.A.S, 92230 Gennevilliers (FR)
(72) Inventeur: Garrigues, Jean-Claude, 33140 Cadaujac (FR); Ferragne, Hubert, 178 rue Stéhélin 33200 Bordeaux (FR)
(74) Mandataire: Eidelsberg, Victor Albert

(56) Documents cités:
- AT-A- 386 878
- GB-A- 970 776
- US-A- 4 770 210

## Description

On connaît déjà un actionneur de robinet qui comprend un système de distribution de fluide moteur à un vérin d'actionnement d'un obturateur. Le système de distribution et le vérin d'actionnement sont logés dans des enveloppes distinctes qui doivent être raccordées par des conduits.

Cette disposition est encombrante et complique le montage.

On connaît déjà un joint d'étanchéité et un boîtier d'actionneur de robinet des documents AT 386878, GB 970776 et US 4770210.

L'invention pallie ces inconvénients par un joint d'étanchéité et par un boîtier d'actionneur de robinet, dans lequel la base du boîtier est conformée de manière à assurer les liaisons de distribution de fluide au vérin.

La base du boîtier est notamment percée d'un trou de passage d'un dispositif de contrôle de position de l'obturateur et la face inférieure de la base est subdivisée en au moins trois alvéoles, dont le premier entoure le trou et dont les deuxième et troisième sont percés chacun de deux orifices traversant la base. La base peut être également subdivisée en au moins cinq alvéoles ayant chacun, hormis le premier, deux orifices traversant la base, l'un des orifices du quatrième alvéole communiquant sur la face supérieure de la base avec l'un des orifices du deuxième alvéole et l'un des orifices du cinquième alvéole correspondant sur la face supérieure de la base avec l'un des orifices du troisième alvéole. Ces orifices permettent d'assurer la communication entre le système de distribution de fluide moteur et le vérin, avec possibilité d'insérer dans l'orifice du quatrième alvéole et celui du cinquième alvéole communiquant avec l'un des orifices du deuxième alvéole et du troisième alvéole, un dispositif de réglage de débit, par exemple sous la forme d'une vis pointeau.

De préférence, un sixième alvéole est muni d'un orifice traversant et d'un orifice débouchant dans un conduit ménagé dans la base et débouchant à l'extérieur du boîtier. Cela permet au fluide moteur de s'échapper du vérin d'actionnement et également à du fluide ayant pu fuir à l'intérieur du boîtier de s'en échapper.

L'invention vise également un joint d'étanchéité en élastomère d'un seul tenant et conformé de manière à délimiter au moins partiellement une maille, caractérisé en ce qu'il comprend, en saillie dans la maille, une partie pleine reliée à un premier côté de la maille par des moyens permettant à la partie pleine de sortir hors du plan de la maille. De préférence, il est prévu une barrette souple de liaison de la partie pleine au premier côté de la maille et une autre barrette souple de liaison de la partie pleine au deux côtés de la maille adjacents au premier côté, les deux barrettes étant notamment perpendiculaires. La partie pleine peut se soulever hors du plan de la maille sous l'effet d'une pression ou y être ramenée. La partie pleine ne s'étend pas, de préférence, jusqu'au côté opposé au premier côté. En tout cas, elle ne lui est pas reliée. Elle occupe avantageusement du tiers au deux tiers de la surface de la maille. Le joint peut être sous la forme d'un filet et délimiter plusieurs mailles dont deux au moins comportent une partie pleine. Ce joint d'étanchéité permet d'obtenir l'étanchéité des liaisons pneumatiques entre le corps de vérin et le boîtier de l'actionneur d'une manière très simple à fabriquer et à monter.

Au dessin annexé, donné uniquement à titre d'exemple :
la figure 1 est une vue de dessous d'un boîtier d'actionneur de robinet, en vue éclatée pour ce qui concerne le joint, et
la figure 2 est une vue en coupe suivant la ligne II-II de la figure 1.

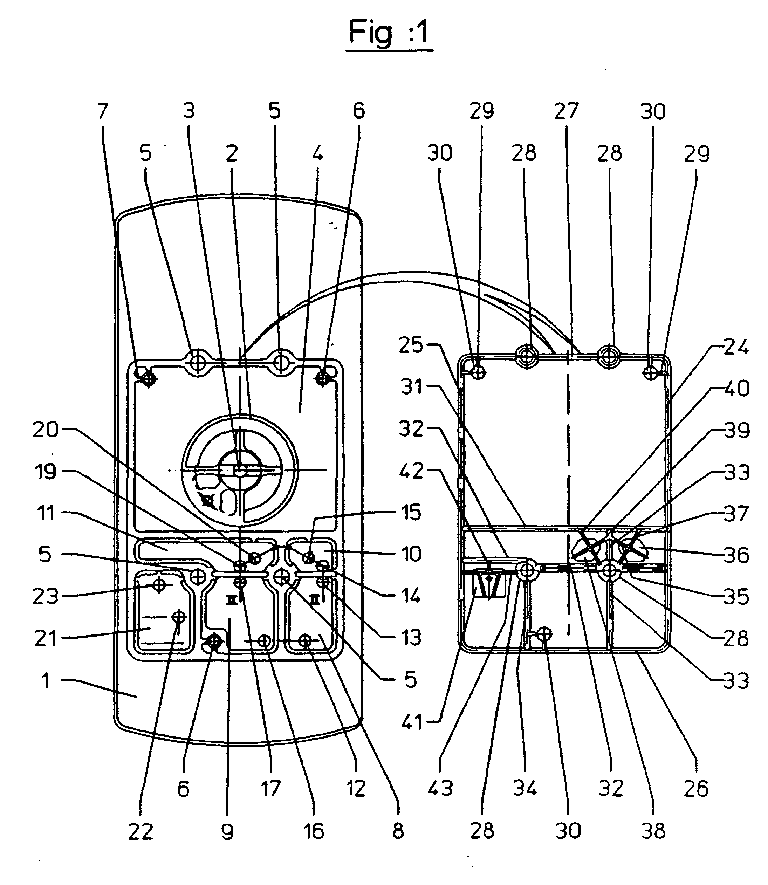

Le boîtier d'actionneur de robinet représenté à la figure 1, comporte une base 1 percée d'un trou 2 dans lequel apparaît un axe 3 de commande destiné à être attaqué par un mandrin non représenté grâce auquel on peut contrôler la position de l'obturateur. Le trou 2 est ménagé dans un premier alvéole 4. Ce premier alvéole 4 est de forme sensiblement rectangulaire. Sur l'un des côtés sont prévus deux trous 5 de fixation destinés au passage d'une vis, tandis que sensiblement aux sommets de l'alvéole, mais légèrement vers l'intérieur, sont prévus deux trous borgnes 6 qui communiquent par des saignées 7 avec les bords de l'alvéole aussi sous forme de gorge.

La base comporte également un deuxième alvéole 8, un troisième alvéole 9, un quatrième alvéole 10 et un cinquième alvéole 11. Tous ces alvéoles ayant une forme sensiblement rectangulaire dont le périmètre est constitué d'une gorge. La face du boîtier comporte, dans le deuxième alvéole 8, un orifice 12 traversant et un orifice 13 qui communique avec un orifice 14 ménagé dans l'alvéole 10. L'orifice 14 communique à son tour avec un orifice 15 ménagé dans l'alvéole 10. De la même façon, l'alvéole 9 comporte un orifice 16 traversant et un orifice 17 communiquant avec un orifice 19 de l'alvéole 11. L'orifice 19 communique avec un orifice 20 de l'alvéole 11.

Il est prévu un sixième alvéole 21 dont le périmètre est constitué d'une gorge. Cet alvéole comporte deux orifices 22 et 23. L'orifice 22 communique avec l'extérieur du boîtier, tandis que l'orifice 23 est traversant et communique avec l'intérieur du boîtier.

Il est prévu entre les alvéoles 8, 9, 10, 11, d'une part, et 9, 11 et 21, d'autre part, à nouveau deux trous de vis 5, tandis qu'il est prévu entre les alvéoles 9 et 21 à nouveau un trou borgne 6 de fixation.

Le joint d'étanchéité, qui s'adapte dans les gorges formant les côtés des alvéoles, a la forme d'un filet délimitant plusieurs mailles correspondant aux alvéoles. Le joint de forme sensiblement rectangulaire comporte deux grand côtés 24, 25 et deux petits côtés 26, 27. Le côté 27 comporte deux parties circulaires 28 délimitant un trou pour le passage de vis. Aux sommets, délimité par les côtés 24 et 27 et 25 et 27, deux pattes 29 mènent à un plot 30 destiné à pénétrer dans les trous borgnes 6. Le joint comporte également deux barrettes 31, 32 parallèles au côté 26 et allant du côté 24 au côté 25 et deux barrettes 33, 34 parallèles au côté 24, la barrette 33 allant du côté 26 à la barrette 31, tandis que la barrette 34 va du côté 26 à la barrette 32. Les intersections des barrettes 33 et 34 avec la barrette 32 comportent des parties circulaires 28 de fixation par vis. A l'intersection de la barrette 34 et du côté 26, est prévu également un plot 30. De la barrette 33 part en biais dans la partie correspondant à l'alvéole 10, une barrette 35 portant une partie pleine 36. Cette partie pleine n'est pas reliée aux autres côtés de la partie du joint correspondant à l'alvéole 10 en sorte qu'elle peut se soulever ou s'appliquer sous l'action d'une pression. Une autre barrette 37 perpendiculaire à la barrette 35 relie la barrette 31 à la partie circulaire 28, mais pourrait également relier la barrette 31 à la barrette 33. De la même façon, une partie pleine 38 est reliée par les barrettes 39, 40 au côté du joint correspondant à l'alvéole 11. Il est également prévu une partie pleine 41 dans la partie correspondant à l'alvéole 21. Cette partie pleine 41 est reliée à la barrette 32 par une barrette 42 et est maintenue également par une barrette 43, perpendiculaire à la barrette 42. Les parties pleines 36, 38 et 41 s'appliquent respectivement aux orifices 15, 20 et 23.

Dans les orifices 14 et 19 sont vissés des vis pointeaux 47.

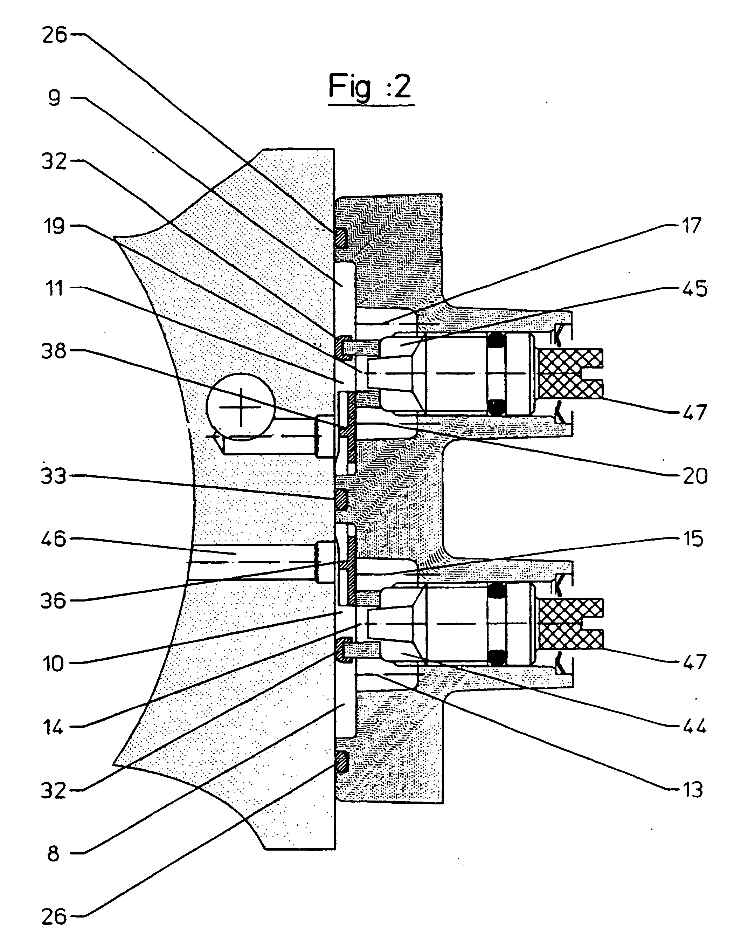

On voit à la figure 2 que les orifices 13, 14 et 15 communiquent entre eux par une chambre 44, tandis que les orifices 17, 19 et 20 communiquent entre eux par une chambre 45.

Le joint d'étanchéité est en une matière élastomère assurant l'étanchéité, tandis que la base du boîtier est, de préférence, métallique mais peut aussi être en matière plastique.

Lorsque l'on veut alimenter en air comprimé le vérin d'actionnement du robinet, on met l'orifice 12 en communication avec une source d'air comprimé. L'air comprimé passe dans l'alvéole 8 puis dans l'orifice 13 et débouche dans la chambre 44. Comme la chambre 44 communique avec l'orifice 14, dont le passage est réduit par le pointeau 47, et avec l'orifice 15, dont le passage est fermé par la partie pleine 36, laquelle dégage l'orifice 15 sous l'effet de la pression, l'air passe de préférence par l'orifice 15 dans l'alvéole 10, lequel est relié par un conduit 46 au vérin.

En sens inverse, lorsque de l'air doit passer du conduit 46 vers l'extérieur, alors que le piston du vérin revient, l'air qui arrive dans l'alvéole 10 ne peut pas passer par l'orifice 15 puisqu'alors la partie pleine 36 ferme cet orifice et passe par l'orifice 14 sous un débit contrôlé par le pointeau 47, en sorte qu'en vissant ou en dévissant le pointeau 47 on peut régler la vitesse d'échappement de l'air.

## Revendications

1. Joint d'étanchéité d'un seul tenant et conformé de manière à délimiter au moins partiellement une maille, **caractérisé en ce qu'**il comprend, en saillie dans la maille, une partie pleine (36) reliée à un premier côté (33) de la maille par des moyens (35) permettant à la partie pleine (36) de sortir hors du plan de la maille.

2. Joint d'étanchéité, suivant la revendication 1, **caractérisé par** une barrette (35) de liaison de la partie pleine (36) au premier côté (33) de la maille et par une autre barrette (37) de liaison de la partie pleine aux deux côtés (31,32) de la maille adjacents au premier côté, les deux barrettes étant, de préférence, perpendiculaires.

3. Joint d'étanchéité suivant la revendication 1 ou 2, **caractérisé en ce qu'**il est sous la forme d'un filet à plusieurs mailles dont deux au moins comportent une partie pleine.

4. Boîtier d'actionneur de robinet, dont la base (1) est percée d'un trou (2), **caractérisé en ce que** la face inférieure de la base (1) est subdivisée en au moins trois alvéoles (4,8,10), dont le premier (4) entoure le trou (2) et dont les deuxième et troisième (8,10) sont percés chacun de deux orifices (12,13,14,15) traversants la base (1).

5. Boîtier suivant la revendication 4, **caractérisé en ce que** la base (1) est subdivisée en au moins cinq alvéoles (4,8,9,10,11), ayant chacun, hormis le premier (4), deux orifices traversant la base (1), l'un des orifices (14) du quatrième alvéole (10) communiquant sur la face supérieure de la base (1) avec l'un des orifices (13) du deuxième alvéole (8) et l'un des orifices (19) du cinquième alvéole (11) communiquant sur la face supérieure de la base (1) avec l'un des orifices (17) du troisième alvéole (9).

6. Boîtier suivant la revendication 4 ou 5, **caractérisé en ce que** l'un des orifices (14) du quatrième alvéole (10) communique avec l'un des orifices (13) du deuxième alvéole (8) par une chambre pratiquée (44) dans la face supérieure de la base et qui s'étend sur au moins une partie des deux orifices.

7. Boîtier suivant l'une des revendications 4 à 6, **caractérisé par** un sixième alvéole (21) muni d'un orifice (23) traversant et d'un orifice (22) débouchant dans un conduit ménagé dans la base (1) et débouchant à l'extérieur du boîtier.

8. Boîtier suivant l'une des revendications 4 à 7, **caractérisé en ce que** les alvéoles sont rendus étanches les uns par rapport aux autres par un joint suivant l'une des revendications 1 à 3, logé dans des rainures ménagées sur la face inférieure de la base (1)

9. Boîtier suivant l'une des revendications 4 à 8, **caractérisé en ce que** des parties pleines du joint sont devant l'orifice du sixième alvéole (21) ne débouchant pas dans une chambre et devant l'un des orifices des premier et deuxième alvéoles (4,8).

10. Boîtier suivant l'une des revendications 6 à 9, **caractérisé par** un dispositif (47) de réglage de débit dans l'orifice (14) et/ou dans l'orifice (19).

## Patentansprüche

1. Einstückige Dichtung zum zumindest teilweisen Begrenzen einer Masche, **dadurch gekennzeichnet, dass** sie ein in die Masche ragendes vollwandiges Teil (36) enthält, das mit einer ersten Seite (33) der Masche über Mittel (35) verbunden ist, die dem vollwandigen Teil (36) ein Herauszutreten aus der Ebene der Masche erlauben.

2. Dichtung gemäß Anspruch 1, **gekennzeichnet durch** eine Zwischenwand (35) zur Verbindung des vollwandigen Teils (36) mit der ersten Seite (33) der Masche und **durch** eine andere Zwischenwand (37) zur Verbindung des vollwandigen Teils mit den zwei an der ersten Seite angrenzenden Seiten (31, 32) der Masche, wobei die beiden Zwischenwände vorzugsweise senkrecht zueinander stehen.

3. Dichtung gemäß Anspruch 1 oder 2, **dadurch gekennzeichnet, dass** sie die Form eines Netzes mit mehren Maschen hat, von denen mindestens zwei ein vollwandiges Teil beinhalten.

4. Gehäuse fiir den Betätiger des Ventils, dessen Basis (1) mit einem Loch (2) durchbohrt ist, **dadurch gekennzeichnet, dass** die Innenseite der Basis (1) in mindestens drei Zellen (4, 8, 10) unterteilt ist, von denen die erste (4) das Loch (2) umgibt und die zweite sowie die dritte (8, 10) jeweils mit zwei die Basis (1) durchsetzenden Öffnungen (12, 13, 14, 15) durchlöchert sind.

5. Gehäuse gemäß Anspruch 4, **dadurch gekennzeichnet, dass** die Basis (1) in mindestens fünf Zellen (4, 8, 9, 10, 11) unterteilt ist, von denen jede, außer der ersten Zelle (4), zwei die Basis (1) durchsetzende Öffnungen hat, wobei eine der Öffnungen (14) der vierten Zelle (10) auf der oberen Seite der Basis (1) mit einer der Öffnungen der zweiten Zelle (8) verbunden ist und eine der Öffnungen (19) der fünften Zelle (11) auf der oberen Seite der Basis (1) mit einer der Öffnungen (17) der dritten Zelle (9) verbunden ist.

6. Gehäuse gemäß den Ansprüchen 4 oder 5, **dadurch gekennzeichnet, dass** eine der Öffnungen (14) der vierten Zelle (10) mit einer der Öffnungen (13) der zweiten Zelle (8) durch eine an der oberen Seite der Basis angebrachten Kammer (44) verbunden ist, die sich über mindestens einen Teil der beiden Öffnungen erstreckt.

7. Gehäuse gemäß einem der Ansprüche 4 bis 6, **gekennzeichnet durch** eine sechste Zelle (21) mit einer durchgehenden Öffnung (23) und mit einer Öffnung (22), die in einem in der Basis (1) eingelassenen Kanal mündet, der außerhalb des Gehäuses endet.

8. Gehäuse gemäß einer der Ansprüche 4 bis 7, **dadurch gekennzeichnet, dass** die Zellen untereinander durch eine Dichtung gemäß einer der Ansprüche 1 bis 3 abgedichtet sind, welche in eingearbeiteten Nuten auf der unteren Seite der Basis (1) sitzt.

9. Gehäuse gemäß einer der Ansprüche 4 bis 8, **dadurch gekennzeichnet, dass** die vollwandigen Teile der Dichtung vor der Öffnung der sechsten Zelle (21), die nicht in einer Kammer mündet, und vor einer der Öffnungen der vierten und fünften Zelle (10, 11) angeordnet sind.

10. Gehäuse gemäß einem der Ansprüche 6 bis 9, **gekennzeichnet durch** eine Vorrichtung (47) zur Regelung der Durchflusses in der Öffnung (14) und/oder in der Öffnung (19).

## Claims

1. One-piece sealing joint shaped so as to define, at least partially, a mesh, **characterised in that** it comprises, projecting into the mesh, a solid part (36) connected to a first side (33) of the mesh by connecting means (35) which enable the solid part (36) to go out of the plane of the mesh.

2. Sealing joint according to claim 1, **characterised by** a bar (35) linking the solid part (36) to the first side (33) of the mesh and another bar (37) linking the solid part to the two sides (31, 32) of the mesh adjacent to the first side, the two bars being preferably perpendicular.

3. Sealing joint according to claim 1 or 2, **characterised in that** it is in the form of a net having a plurality of meshes, at least two of which comprise a solid part.

4. Stopcock actuator casing, the base of which is formed with a hole (2), **characterised in that** the underside of the base (1) is subdivided into at least three compartments (4, 8, 10), the first (4) of which surrounds the hole (2) and the second (8) and third (10) of which are each formed with two orifices (12, 13, 14, 15) passing through the base (1).

5. Casing according to claim 4, **characterised in that** the base (1) is subdivided into at least five compartments (4, 8, 9, 10, 11), each of which, with the exception of the first (4), has two orifices passing through the base (1), one of the orifices (14) of the fourth compartment (10) communicating on the upper surface of the base (1) with one of the orifices (19) of the second compartment (8), and one of the orifices (19) of the fifth compartment (11) communicating on the upper surface of the base (1) with one of the orifices (17) of the third compartment (9).

6. Casing according to claim 4 or 5, **characterised in that** one of the orifices (14) of the fourth compartment (10) communicates with one of the orifices (13) of the second compartment (8) via a chamber (44) formed in the upper surface of the base and extending over at least part of the two orifices.

7. Casing according to one of claims 4 to 6, **characterised in that** a sixth compartment (21) is provided, having a through-orifice (23) and an orifice (22) opening into a conduit provided in the base (1) and opening outside the casing.

8. Casing according to one of claims 4 to 7, **characterised in that** the compartments are made leaktight relative to one another by a sealing joint according to claims 1 to 3, the joint being accommodated in grooves formed on the underside of the base (1).

9. Casing according to one of claims 4 to 8, **characterised in that** solid parts of the joint are in front of the orifice in the sixth compartment (21) which does not open into a chamber, and in front of one of the orifices in the first and second compartments (4, 8).

10. Casing according to one of claims 6 to 9, **characterised by** a flow regulating device (44) provided in the orifice (14) and/or in the orifice (19).
